# EUROPEAN PATENT SPECIFICATION

(11) **EP 2 009 544 B1**
(45) Date of publication and mention of the grant of the patent: **07.04.2010**
(21) Application number: 07111026.6
(22) Date of filing: 26.06.2007
(51) Int. Cl.: G06F 9/38, G06F 9/32

(54) **Data-processing unit for nested-loop instructions**
Datenverarbeitungseinheit für Anweisungen in geschachtelten Schleifen
Unité de traitement de données pour instructions en boucle emboîtée

(43) Date of publication of application: 31.12.2008
(73) Proprietor: TELEFONAKTIEBOLAGET LM ERICSSON (publ), 164 83 Stockholm (SE)
(72) Inventor: Gustafsson, Harald, SE-223 63, LUND (SE); Psersson, Per, SE-222 70, LUND (SE)
(74) Representative: Andersson, Björn E.

(56) References cited:
- EP-A- 0 992 888
- US-A1- 2002 083 305
- US-A1- 2003 200 423

## Description

### Technical Field

The present invention relates to the field of digital processors, and in particular to the execution of operations of nested loops in digital processors.

### Background

Digital processors execute instructions, so called machine-code instructions, to perform specific tasks. A processor has a set of different instructions, the instruction set, wherein each instruction performs a specific operation or sequence of operations.

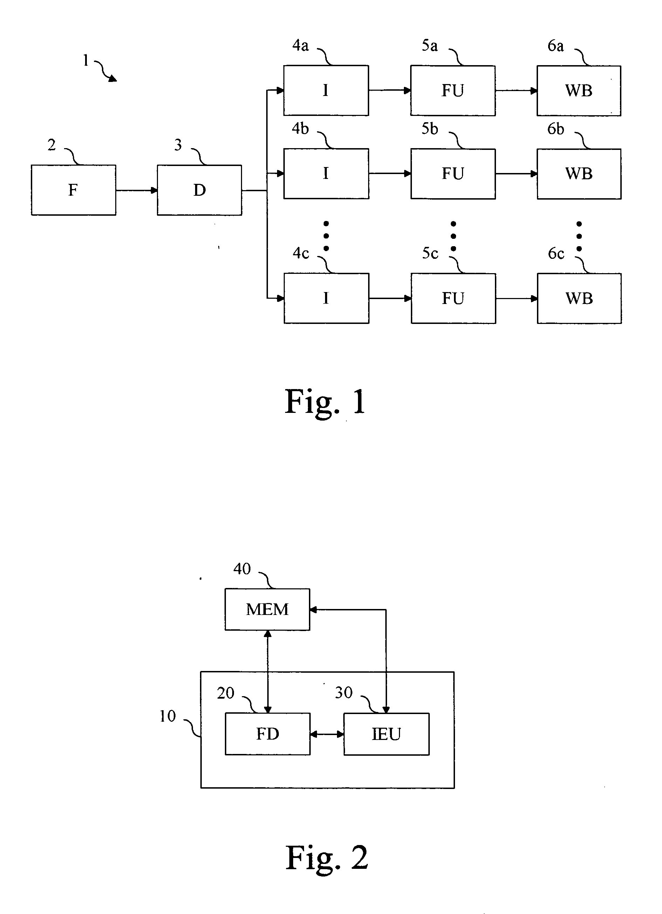

Figure 1 is a block diagram describing one example of a structure of a processor 1. A fetch stage (F) 2 loads an instruction e.g. from a memory (not shown). For example, one instruction may be loaded per cycle. Then a decoding stage (D) 3 prepares the instruction for execution. The decoding stage 3 may, for example, interpret which operation(s) should be performed, handle registers, etc. After the decoding stage, the processor comprises one or more pipelines of processor stages. To enable parallel execution of instructions, at least two pipelines are required. Each pipeline comprises an issue stage (I) 4a-c, a functional unit (FU) 5a-c, and a write back stage (WB) 6a-c. The issue stages 4a-c issue ready instructions. For an instruction to be ready, it has to have been fetched and decoded. Furthermore, for an instruction to be ready, there cannot be any outstanding data dependencies associated with that instruction. When an instruction has been issued, execution of the operations specified by the instruction is started in the corresponding functional unit 5a-c. Finally, when execution of the operations specified by the instruction are finalized in the functional unit 5a-c, the corresponding write back stage 6a-c ensures that e.g. all output data and other relevant parameters are properly stored in the registers (not shown) and/or the memory (not shown).

This structure permits that the functional units may work in parallel, executing the operations as specified by different instructions, under certain circumstances. A requisite for such parallel operation is that the instruction executed by one of the functional units does not depend on a result of an instruction executed by another one of the functional units. A further requisite for parallel operation may be that at least one instruction is ready for execution when one or more of the issue stages 4a-c are ready to issue a new instruction, i.e., that there is an instruction available that has been loaded and prepared for execution by e.g. the fetch and decode stages as illustrated in Figure 1.

Software programs, i.e., the object that contains the list of instructions that need to be executed to perform a given task, often have loops. A loop is a repeatedly executed part of the program. The loop may contain instructions for loading and/or storing data, instructions for performing operations on the data, as well as instructions for control of the loop behavior. Such loop behavior may for example be to initiate a counter, decrement or increment the counter, and leaving the loop when the counter reaches a threshold value.

It is common that software programs contain nested loops. Nested loops are loops that contain loops. These are often referred to as outer and inner loops. Nested loops are not limited to two levels of loops; contrarily there may be an arbitrary number of layers of nested loops.

In the instruction set of some processors, there exists a repeat instruction prefix for repeating a single instruction until a condition is met, which gives support for single loops when a single loop needs to perform operations that can be specified by a single instruction.

The instruction set of other processors comprises a nested-loop instruction, where start and stop values of the nested loop are given in a single instruction. For example, US 2002/0083305 Al discloses a single instruction that provides for execution of other instructions of a set of instructions in accordance with multiple looping constructs. This arrangement, however does not free the fetch and decode stages of the processor, and hence no instructions other than the instructions executed within the nested loop may be loaded and prepared before the execution of the nested loop is completed. This may lead to that several of the functional units of the processor are idle during the execution of nested loops, which naturally is a waste of processor resources as the execution of a nested loop may require several cycles. This is a serious disadvantage with regard to the execution time of a program that contains nested loops.

Thus, there is a need for processors comprising an instruction set, which facilitates simultaneous execution of a nested loop and instructions that are not contained in the nested loop. Further there is a need for methods for facilitating simultaneous execution of a nested loop and instructions that are not contained in the nested loop.

### Summary

It is an object of the invention to obviate at least some of the above disadvantages and to provide improved methods and processors for execution of nested loops.

According to a first aspect of the invention, this is achieved by a data-processing unit that comprises fetching and decoding circuitry and execution circuitry. The fetching and decoding circuitry is arranged to fetch and decode an instruction, wherein the instruction is a nested-loop instruction of an instruction set of the data-processing unit, and the execution circuitry is arranged to execute the nested-loop instruction. The nested-loop instruction comprises at least one instruction field, and said at least one instruction field is adapted to indicate a number of iterations of an outer loop of the nested loop and a number of iterations of an inner loop of the nested loop. The fetching and decoding circuitry is further arranged to decode said nested-loop instruction to identify at least one instruction field of the nested-loop instruction is further adapted to indicate one or more operations to be performed by the outer loop and one or more operations to be performed by the inner loop indicated in the at least one instruction field of the nested-loop instruction.

It should be noted that throughout the description of embodiments of the invention, the partition of functional blocks into particular units is by no means limiting to the invention. Contrarily, these partitions are merely examples. Blocks described herein as one unit may be split into two or more units. In the same manner, functional blocks that are described herein as being implemented as two or more units may be implemented as a single unit without departing from the scope of the invention.

The at least one instruction field of the at least one nested-loop instruction may be further adapted to indicate a number of iterations of a second inner loop of the nested loop and one or more iterations to be performed by the second inner loop, wherein the second inner loop is a loop on the same level as the first inner loop. Alternatively or in addition, the at least one instruction field of the at least one nested-loop instruction may be further adapted to indicate a number of iterations of a third-level loop of the nested loop and one or more iterations to be performed by the third-level loop.

According to some embodiments of the first aspect of the invention, the at least one instruction field is adapted to comprise at least one operand, which indicates that the instruction is a nested-loop instruction. Thus, in these embodiments, the at least one instruction field is adapted to indicate the number of iterations of the outer and inner loop and the one or more operations to be performed by the outer and inner loop by way of indicating an operand, which in turn defines the number of iterations and the operations to be performed, and thereby defines the instruction to be a nested-loop instruction.

The at least one instruction field may be adapted to comprise at least one reference to at least one register of the data-processing unit, and the at least one reference may comprise a copy of the content of the at least one register. The content of the at least one register may comprise a pointer to data to be used in any of the at least one operation, data to be used in any of the at least one operation, and/or data defining a size of a vector of data elements, the vector being an operand of the at least one nested-loop instruction. Further, the at least one register may comprise a first register field comprising data adapted to indicate the number of iterations of the outer loop and a second register field comprising data adapted to indicate the number of iterations of the inner loop.

The number of iterations of any of the loops may be indicated by data comprising the number of iterations of the loop, or the number of iterations may be indicated by data comprising a start value and a stop value of a loop index of the loop. In the latter case, the data may further comprise a step size for updating the loop index of the loop between subsequent iterations of the loop. Alternatively, the number of iterations of any of the loops may be indicated by data defining a size of a vector of data elements, the vector being an operand of the nested-loop instruction. In this embodiment, the data-processing unit may be adapted to derive the number of iterations of the loop based on the size.

The fetching circuitry may comprise a fetch and decode unit and the execution circuitry may comprise a first instruction-execution unit. The first instruction-execution unit may comprise at least one functional unit adapted to execute the nested-loop instruction. The fetch and decode unit may be adapted to forward, in response to fetching a nested-loop instruction, the nested-loop instruction to the first instruction-execution unit for execution in the first instruction-execution unit. The execution circuitry may further comprise at least one second instruction-execution unit adapted to execute instructions in parallel with execution of the nested-loop instruction in the first instruction-execution unit. The fetch and decode unit may be further adapted to fetch another instruction, not associated with the execution of the nested-loop instruction, subsequently to forwarding the nested-loop instruction to the first instruction-execution unit.

The first instruction-execution unit may comprise a first and a second counter unit adapted to count iterations of the outer and inner loop, respectively, and at least one loop-control unit. The at least one loop-control unit may be adapted to set the first and second counter units to a first and second start value before execution of the inner and outer loops, respectively. The at least one loop-control unit may further be adapted to update the first and second counter units during each iteration of the inner and outer loops, respectively, to stop execution of the inner loop when the second counter unit meets a first condition, wherein the first condition is associated with the inner loop, and to stop execution of the outer loop when the first counter unit meets a second condition, wherein the second condition is associated with the outer loop. The first instruction-execution unit may further comprise a determination unit for determining the first start value and a threshold value associated with the outer loop based on the at least one instruction field of the nested-loop instruction, and the second start value and a threshold value associated with the inner loop based on the at least one instruction field of the nested-loop instruction. The first instruction-execution unit may further be adapted to perform first operations associated with the outer loop before starting execution of the inner loop, and second operations associated with the outer loop after stopping execution of the inner loop.

The data-processing unit may further comprise one or more local storage units for storing intermediate results from the execution circuitry.

According to a second aspect of the invention, an electronic apparatus comprises a data-processing unit according to the first aspect of the invention. The electronic apparatus may, for example, be a portable or handheld mobile radio communication equipment, a mobile radio terminal, a mobile telephone, a pager, a communicator, an electronic organizer, a smartphone, a computer, an embedded drive, a mobile gaming device, a watch, a base station, or a base station controller.

According to a third aspect of the invention, an object of the invention is achieved by a method of performing a first instruction for use in a data-processing unit, wherein the first instruction is a nested-loop instruction. The method comprises fetching the first instruction from a memory, decoding the first instruction to identify an instruction type, a number of iterations of an outer loop of the nested loop, and a number of iterations of an inner loop of the nested loop, forwarding the first instruction to a first execution unit of the data-processing unit, and executing the first instruction in the first execution unit. The decoding further comprises decoding the first instruction to identify one or more operations to be performed by the outer loop, and one or more operations to be performed by the inner loop.

Decoding the nested-loop instruction may further comprise decoding the first instruction to identify a number of iterations of a second inner loop of the nested loop, and one or more iterations to be performed by the second inner loop, wherein the second inner loop is a loop on the same level as the first inner loop. Alternatively or in addition, decoding the nested-loop instruction may further comprise decoding the first instruction to identify a number of iterations of a third-level loop of the nested loop, and one or more iterations to be performed by the third-level loop.

The method may further comprise fetching a second instruction from the memory, decoding the second instruction to identify an instruction type, forwarding the second instruction to a second execution unit of the data-processing unit, and executing the second instruction in the second execution unit in parallel with execution of the nested-loop instruction in the first execution unit.

Furthermore, the method may comprise setting first and second counters to a first and second start value before execution of the outer and inner loops, respectively, updating the first and second counters during each iteration of the outer and inner loops, respectively, stopping execution of the inner loop when a first condition is met, wherein the first condition is associated with the inner loop, and stopping execution of the outer loop when a second condition is met, wherein the second condition is associated with the outer loop. The method may also comprise performing first operations associated with the outer loop before starting execution of the inner loop, and performing second operations associated with the outer loop after stopping execution of the inner loop.

According to a fourth aspect of the invention, an object of the invention is achieved by a processor instruction loadable into a data-processing unit and adapted to cause performance of nested-loop operations upon execution by execution circuitry in the data-processing unit. The processor instruction comprises at least one instruction field, which is adapted to indicate a number of iterations of an outer loop of the nested loop, and a number of iterations of an inner loop of the nested loop. The at least one instruction field is further adapted to indicate one or more operations to be performed by the outer loop, and one or more operations to be performed by the inner loop. The invention may also be embodied as programming instructions comprised partly or entirely in a computer readable medium, such as for example a solid-state memory, a magnetic disc, an optical disc, or a carrier wave.

Further embodiments of the invention are defined in the dependent claims.

Some of the advantages of the invention are that a nested loop can be specified by a single instruction, and that there is no need for a fetch and decode unit to load and interpret instructions defining operations to be performed by the nested loop from a memory unit during the execution of a nested loop. Therefore, a further advantage is that the fetch and decode unit is not locked up by the nested-loop instruction during the entire execution of the instruction, which leads to that it may be possible for the remaining instruction-execution units to be supplied with other instructions to enable parallel execution of instructions. Therefore, since parallel execution of instructions is possible even for nested-loop instructions, resources can be utilized more efficiently, and there is less idle time for the instruction-execution units. A further advantage of the invention is reduced execution time of programs that contain nested-loop instructions.

It should be emphasized that the term "comprises/comprising" when used in this specification is taken to specify the presence of stated features, integers, steps, or components, but does not preclude the presence or addition of one or more other features, integers, steps, components, or groups thereof.

### Brief Description of the Drawings

Further objects, features and advantages of the invention will appear from the following detailed description of the invention, with reference being made to the accompanying drawings, in which:
Fig. 1 is a block diagram of an example data-processing unit;
Fig. 2 is a block diagram of a data-processing unit according to some embodiments of the invention;
Fig. 3 is a block diagram of a data-processing unit according to some embodiments of the invention;
Fig. 4 is a block diagram of one example embodiment of an instruction-execution unit according to the invention;
Fig. 5 is a number of flow charts illustrating a process of executing a nested-loop instruction according to some embodiments of the invention;
Fig. 6 illustrates schematic diagrams of example nested-loop instructions according to some embodiments of the invention;
Fig. 7 is a flow chart of a process of instruction handling in a data-processing unit according to some embodiments of the invention; and
Fig. 8 is a schematic front view of a mobile terminal, which may contain one or more data-processing units according to any of the Figures 1-3.

### Detailed Description

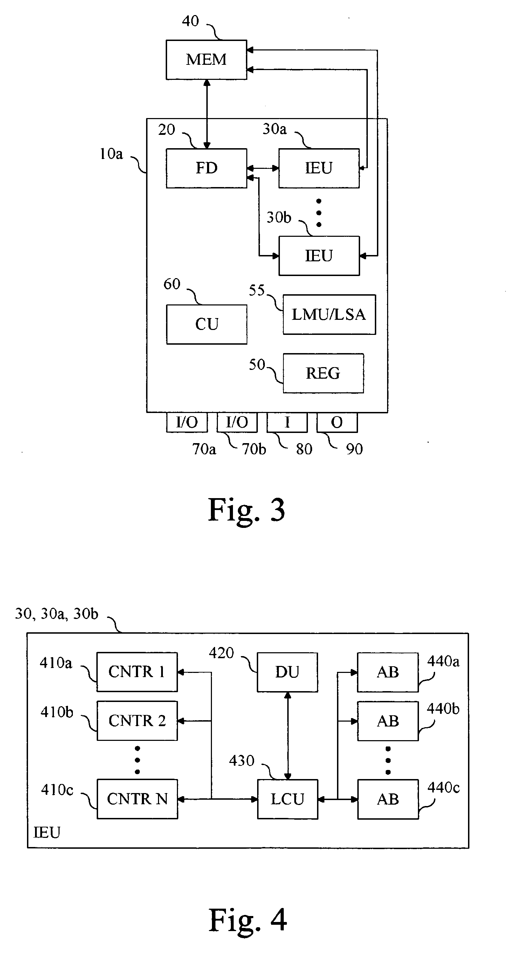

Figures 2 and 3 show block diagrams of data-processing units 10, 10a according to some embodiments of the invention. Each of the data-processing units may, for example, be embodied as or included within a digital signal processor (DSP), a central processing unit (CPU), a co-processor unit, a graphics processing unit (GPU), an accelerator, or an application-specific integrated circuit (ASIC) .

According to embodiments of the invention, the instruction set of the data-processing unit 10, 10a, i.e., the set of machine-code instructions that the data-processing unit is adapted to execute, comprises at least one instruction that specifies a nested-loop operation. Such an instruction is in the following referred to as a nested-loop instruction.

According to the embodiments illustrated in Figures 2 and 3, the data-processing units 10, 10a each comprises an instruction fetch and decode (FD) unit 20, which may be similar or equivalent to the fetch and decode stages 2, 3, of Figure 1. Further, the data-processing units 10, 10a each comprise one or more instruction-execution unit (IEU) 30, 30a, 30b. Each of the instruction-execution units 30, 30a, 30b may for example comprise one or more functional units (cf. FU 5a-c in Figure 1) for performing operations needed for executing instructions in the data-processing unit 10, 10a. The one or more functional units may be, but is not limited to, any of an arithmetic-logic unit (ALU), a multiply-accumulate unit (MAC), a butterfly unit for performing computations for e.g. data transforms such as a fast Fourier transform (FFT) or a discrete cosine transform (DCT), an address generator, a floating-point unit, and the like. Each of the instruction-execution units 30, 30a, 30b may also comprise one or more issue stages (cf. issue stages 4a-c in Figure 1) and/or write back stages (cf. WB stages 6a-c in Figure 1).

In addition to the fetch and decode unit 20 and the one or more instruction-execution units 30, 30a, 30b, each of the data-processing units 10, 10a may comprise various other units as shown in Figure 3. These other units may be, but are not limited to, one or more register units (REG) 50 comprising one or more general-purpose and/or special-purpose registers, one or more local memory units or local storage areas (LMU/LSA) 55, one or more control units (CU) 60 for controlling various operations of the data-processing unit 10, 10a, output and/or input interfaces (O, I, I/O) 70a, 70b, 80, 90, etc., as is known in the art. Each of the one or more local memory units or local storage areas may also be used as register units.

The data-processing units 10, 10a may further comprise a local scratch area for storing of intermediate results from the execution of the nested-loop instruction. This local scratch area may, for example, be a local memory or a dedicated part of the registers. These resources may be temporarily dedicated for a nested-loop instruction to be executed. If the nested-loop instruction does not have such dedicated resources at its disposal, the corresponding instruction-execution unit may have to compete for storing resources with the instruction-execution units that execute other instructions.

The data-processing unit 10, 10a may further be operatively connected to one or more memory units 40. The one or more memory units 40 may contain for example software instructions to be executed in the data-processing unit and/or data to be processed by the data-processing unit. The one or more memory units may e.g. comprise read/write memories, such as random-access memories (RAM), and/or read-only memories (ROM). Any type of memories as known in the art may be considered, such as, for example, static RAM (SRAM), dynamic RAM (DRAM), NOR Flash memories, etc.

According to some embodiments of the invention, the fetch and decode unit 20 is operatively connected to the memory unit 40. The fetch and decode unit 20 may also be connected to the one or more register units 50 which may, for example, contain data to be processed by the data-processing unit, a pointer to an operand of an instruction, a field that indicates the number of iterations to be performed by a particular loop of a nested-loop instruction, etc. When there is a single fetch and decode unit 20, the fetch and decode unit 20 is further connected to each of the one or more instruction-execution units 30, 30a, 30b. Some processors according to embodiments of the invention may comprise several fetch and decode units, and in such embodiments each fetch and decode unit is connected to at least one of the one or more instruction-execution units 30, 30a, 30b. Each of the instruction-execution units 30, 30a, 30b may be connected to the one or more register units 50 and/or to the memory unit 40.

It should be noted that the partition of functional blocks into the particular units as shown in Figures 1-3 is by no means limiting to the invention. Contrarily, these partitions are merely examples. In some embodiments of the invention, for example, blocks such as the fetch and decode unit 20 and the one or more instruction-execution units 30, 30a, 30b may each be split into two or more units. In other embodiments of the invention, blocks such as the fetch and decode unit 20 and the one or more instruction-execution units 30, 30a, 30b may be implemented as a single unit.

With reference to Figure 4, one example embodiment of an instruction-execution unit 30, 30a, 30b, is further described. In this embodiment the instruction-execution unit comprises one or more counter units (CNTR 1, CNTR 2, CNTR N) 410a-c. The counter units 410a-c may each be associated with a respective loop counter of a nested-loop instruction, when said instruction is executed by the instruction-execution unit 30, 30a, 30b. The instruction-execution unit of this embodiment also comprises a loop-control unit (LCU) 430. One task for the loop-control unit 430 is to set the counter units 410a-c to respective start values before the execution of the associated loop commences. Another task for the loop-control unit 430 is to update the corresponding counter unit 410a-c during an iteration of the associated loop. A third task for the loop-control unit 430 is to stop the execution of the corresponding loop when the counter unit 410a-c reaches a threshold value associated with the corresponding loop.

The instruction-execution unit 30, 30a, 30b of this embodiment may further comprise a determination unit (DU) 420. The determination unit 420 may be configured to determine a start value associated with one or more of the loops in the nested-loop instruction that is being executed by the instruction-execution unit. The determination unit 420 may alternatively or additionally be configured to determine a stop value or threshold value associated with one or more of the loops in the nested-loop instruction. The determination unit 420 may also be configured to determine a number of iterations to be performed for one or more of the loops in the nested-loop instruction.

Furthermore, the instruction-execution unit 30, 30a, 30b of this embodiment may comprise one or more additional block (AB) 440a-c. These one or more additional blocks are generally adapted to perform operations associated with one or more of the loops in the nested-loop instruction. The one or more additional blocks may be designed to perform one or more specific tasks or it may be general-purpose logic. The one or more additional blocks 440a-c may comprise, but is not limited to, an address generator, control circuitry to update an address generator, a modulo counter, an accumulator, an arithmetic-logic unit (ALU), a multiply-accumulate unit (MAC), a butterfly unit for performing computations for e.g. data transforms such as a fast Fourier transform (FFT) or a discrete cosine transform (DCT), a floating-point unit, circuitry adapted to perform entry and/or exit operations (such as e.g. resetting an accumulator) for one or more of the loops in the nested loop, control logic adapted to control, update and/or reset one or more of the additional blocks, and the like.

According to the invention, a nested loop can be specified by a single instruction. This means that, during the execution of the nested loop, there is no need for the fetch and decode unit 20 to load and interpret instructions defining operations to be performed by the nested loop from the memory unit 40, since these operations are defined by the nested-loop instruction itself. Since the execution of a nested loop normally requires several cycles it is vital that the fetch and decode unit is not locked up by the nested-loop instruction during the entire execution of the instruction, so that it may be possible for the remaining instruction-execution units to be supplied with other instructions to enable parallel execution of instructions. Therefore, when using nested-loop instructions according to embodiments of the invention, resources, such as a bus, a memory interface, the memory unit 40 and the fetch and decode unit 20, can be utilized more efficiently, and there is less idle time for the instruction-execution units 30, 30a, 30b, since parallel execution of instructions is possible even for nested-loop instructions, all of which reduce the execution time of programs that contain nested-loop instructions.

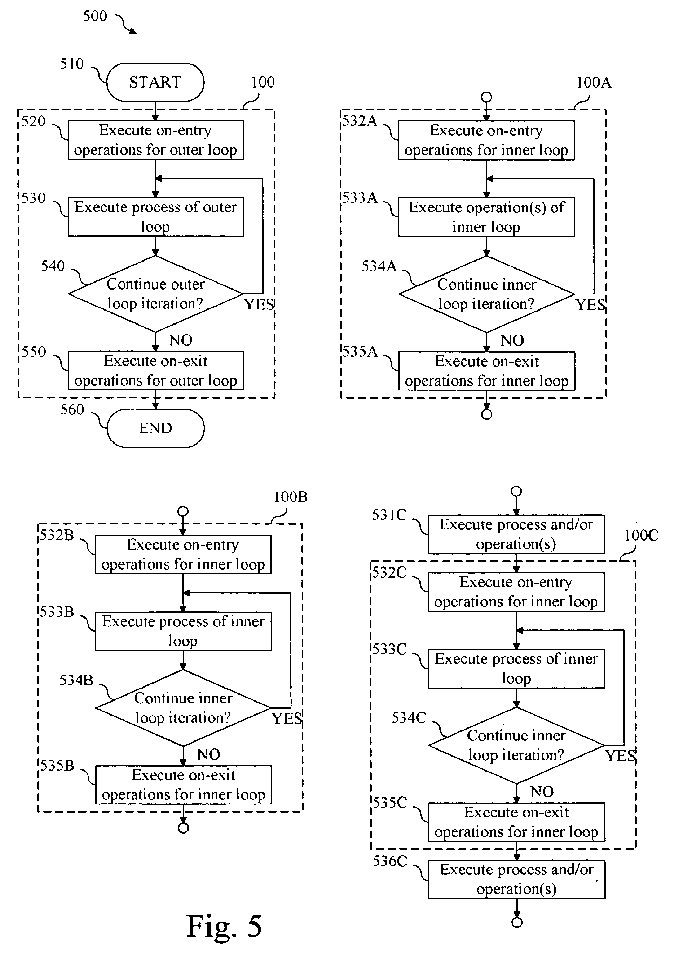

Figure 5 is a flow chart of a process 500 for executing a nested-loop instruction, which may be executed in an instruction-execution unit 30, 30a, 30b of the data-processing unit 10, 10a, according to some embodiments of the invention. The nested loop illustrated in Figure 5 comprises an outer loop block 100 and an inner loop block 100A-C. The outer loop has an associated loop index k1. The loop index k1 has an associated first start value, START1, and an associated first stop value, STOP1. Similarly, the inner loop has an associated loop index k2. The loop index k2 has an associated second start value, START2, and an associated second stop value, STOP2.

When the processing of the nested-loop instruction begins in step 510, it is assumed that the instruction has already been made available to an instruction-execution unit 30, 30a, 30b. For example, a fetch and decode unit 20 may have loaded the instruction from a memory 40, possibly together with operand values from the memory 40 and/or the one or more register units 50. The fetch and decode unit 20 may then have interpreted the instruction and made it available to the instruction-execution unit 30, 30a, 30b.

In step 520, operations are executed that are to be performed before starting the iteration part of the outer loop. These operations are denoted on-entry operations and may, for example comprise initiating the associated loop counter, i.e. setting the loop index k1 of the outer loop to START1. Other examples of on-entry operations may be initiation of accumulators, loading of data from the memory unit, etc.

Then, the iteration part of the outer loop starts in step 530, where various operations may be performed. The various operations may, for example, include fetching data from and/or writing data to the memory 40 and/or registers 50, performing arithmetic and/or logic operations on data, etc. The various operations of step 530 may also comprise updating the loop index k1 of the outer loop, for example by adding one to said loop index k1. Step 530 also comprises execution of an inner loop block 100A-C.

In step 540, the loop index k1 of the outer loop is compared to STOP1. If k1 < STOP1, the outer loop should continue for at least one more iteration. Hence, if the answer in step 540 is YES, the execution of the process returns to step 530. Otherwise, the execution of the iteration part of the outer loop is ended and the execution of the process continues to step 550, where operations are executed that are to be performed after leaving the iteration part of the outer loop. These operations are denoted on-exit operations and may, for example, comprise clearing the associated loop counter, writing data to a memory unit or register, clearing an accumulator, etc.

Then the process continues to step 560, where, according to this example, the process is ended.

The outer loop is executed for a number of iterations. The number of iterations of the outer loop is, in this example, determined by the first start value START1 and the first stop value STOP1. In the example, the number of iterations of the outer loop is STOP1-START1.

For each iteration of the outer loop, an inner loop is executed in step 530. The inner loop may, for example, comprise the inner loop block 100A.

In step 532A, operations are executed that are to be performed before starting the iteration of the inner loop. As before, these operations are denoted on-entry operations and may, for example comprise initiating the associated loop counter, i.e. setting the loop index k2 of the inner loop to START2. Other examples of on-entry operations are given above.

Then, execution of the iteration part of the inner loop starts in step 533A, where various operations may be performed. As for step 530 of the outer loop, the various operations may e.g. include fetching data from and/or writing data to the memory 40 and/or registers 50, performing arithmetic and/or logic operations on data, etc. The various operations of step 533A may also comprise updating the loop index k2 of the inner loop, for example by adding one to said loop index k2.

In step 534A, the loop index k2 of the inner loop is compared to STOP2. If k2 < STOP2, the inner loop should continue for at least one more iteration. Hence, if the answer in step 534A is YES, the execution of the process returns to step 533A. Otherwise, the execution of the iteration part of the inner loop is ended and the execution of the process continues to step 535A. In step 535A, operations are executed that are to be performed after leaving the iteration part of the inner loop. These operations are denoted on-exit operations and examples of such iterations are given above.

The number of iterations of the inner loop, during each iteration of the outer loop, is in this example determined by the second start value START2 and the second stop value STOP2. In the example, the number of iterations of the inner loop is STOP2-START2 for each iteration of the outer loop.

The inner loop executed in step 530 may alternatively comprise the inner loop block 100B. The operation of method steps 532B, 533B, 534B and 535B is similar to the operation of method steps 532A, 533A, 534A and 535A, with the exception that step 533B may itself comprise execution of a third level loop block similar to the inner loop blocks 100A-C.

As a further alternative, the inner loop executed in step 530 may comprise the inner loop block 100C. The operation of method steps 532C, 533C, 534C and 535C is similar to the operation of method steps 532A-B, 533A-B, 534A-B and 535A-B. In additional steps 531C and 536C, various operations associated with each iteration of the outer loop may be performed as touched upon above in connection to the description of method step 530. However, it is also possible for one or both of method steps 531C and 536C to comprise execution of another loop block similar to the inner loop blocks 100A-C.

It should be noted that the flow charts in Figure 5 are only examples of nested loop operations. For example, the comparison made in steps 534A-C may be different. As a non-limiting example, the comparison in steps 534A-C may be k2 ≤ STOP2. Furthermore, the updating of the loop index k2 may be performed by decrementing k2 instead of incrementing k2. Then, the comparison in steps 534A-C may be k2 > STOP2 or k2 ≥ STOP2. In general, steps 534A-B are not limited to a threshold comparison, but may comprise any condition that can determine if further iterations of the inner loop should be performed. As non-limiting examples, steps 534A-C may test if k2 is even or odd, if the absolute value of k2 is equal to a predetermined value, etc. Moreover, the loop index k2 may be incremented or decremented with a step value different from one. Alternatively, the loop index k2 may be updated by using modulo operations, by swapping or permuting bits, or the like as known in the art. The same generalizations apply to the index k1 of the outer loop and to comparison step 540.

It should also be noted that a nested loop may comprise more than two loops. For example, one or more of the steps 533B, 531C, 533C and 536C may comprise one or more loops, even nested loops. Hence, a nested loop may comprise an arbitrary number of loop levels. A nested loop may also comprise several loops at the same level.

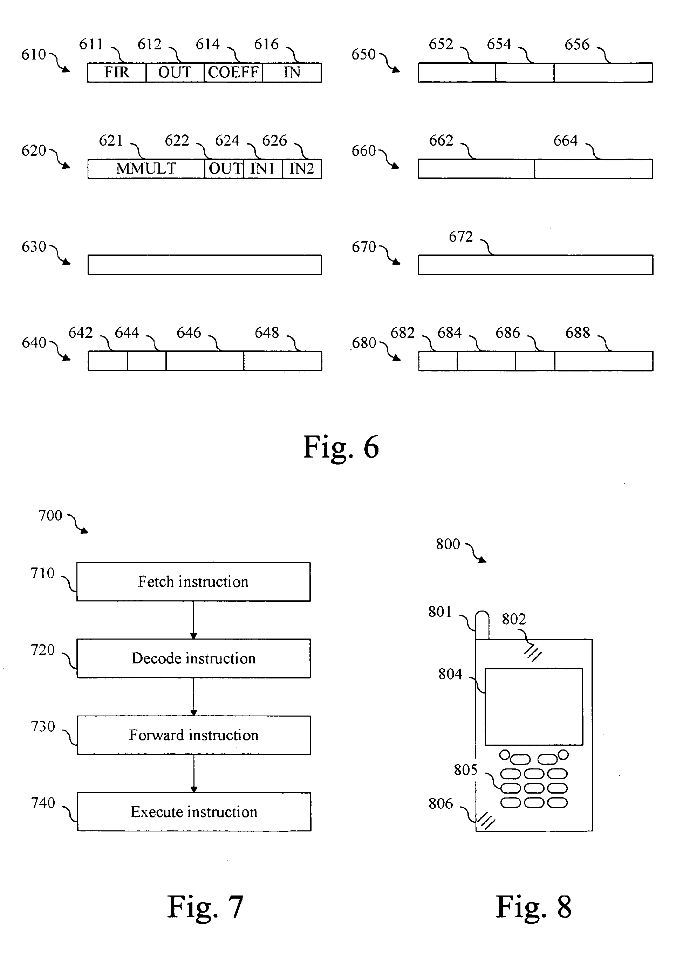

According to some embodiments of the invention, example nested-loop instructions may be schematically illustrated according to Figure 6. In these examples, a nested-loop instruction comprises one or more instruction fields, i.e. a set of one or more bits in the nested-loop instruction. The one or more instruction fields are adapted to indicate a number of iterations of an outer loop and a number of iterations of an inner loop. The one or more instruction fields of the nested-loop instruction are further adapted to indicate one or more operations to be performed by the outer loop, and one or more operations to be performed by the inner loop. Furthermore, the one or more instruction fields may be adapted to indicate the number of iterations of one or more additional loops and one or more operations to be performed by the one or more additional loops.

The number of iterations of a respective loop may be indicated directly in an instruction field, i.e., the instruction field may comprise data that equals the number of iterations. Alternatively, the number of iterations of a respective loop may be indicated indirectly in one or more instruction fields. For example, the one or more instruction fields may comprise data that indicates the start and stop values of a loop index associated with the respective loop, and possibly data that indicates a step size for incrementing the loop index. The indirect indication in the one or more instruction fields of the number of iterations of the respective loop may also be embodied by a reference in the one or more instruction fields to at least one register of the data-processing unit. The reference to a register may be a direct reference or, in some embodiments of the invention, it may be a copy of the register content in accordance with the pipeline architecture, such as, for example, a pipeline copy. The register content may comprise data indicating the number of iterations of the respective loop, either directly, i.e., the data is equal to the number of iterations, or indirectly by, for example, comprising a start and stop value and possibly a step size in a manner similar to what was explained above. The register content may alternatively comprise data that defines a size of a vector of data elements, where the vector may be an operand of the nested-loop instruction for example. Then, the number of iterations may be derived from the size of the vector. The size may either be defined directly or indicated indirectly if, for example, the register content is a memory reference or pointer to a vector, which in turn comprises data that indicates the size of the vector.

Returning now to Figure 6, some example nested-loop instructions 610, 620, 630, 640, 650, 660, 670, and 680 according to embodiments of the invention, will be described. The first example of a nested-loop operation that may be wrapped into a single instruction according to embodiments of the invention is the operation of a finite impulse response (FIR) filter.

A standard solution to implementing a FIR filter is to have an outer loop comprising (apart from loop management such as control of the loop counters) operations such as initiating an accumulator on entry, collecting an input sample to the FIR filter for each iteration of the outer loop, performing an inner loop, and writing an output sample for each iteration of the outer loop. The inner loop normally comprises (apart from loop management such as control of the loop counters) operations such as updating, for each iteration of the inner loop, the accumulator with a product of an input sample value from a delay line and its corresponding FIR filter coefficient.

With the nested-loop instruction 610 of Figure 6, this is all defined in a single instruction. The first field 611 of the example instruction 610 defines the operations to be performed by the data-processing unit when executing the nested-loop instruction, i.e., the operations of the inner and outer loops. The second, third and fourth fields 612, 614, 616 may for example indicate where to put the output data from the FIR filter, and where to find the filter coefficients and the data samples to be filtered. These indications may be either direct by including e.g. the coefficients and the data to be filtered (or pointers thereto) in the fields 612, 614, 616, or they may be indirect by referencing one or more registers. As before, the reference to a register may be a direct reference or it may comprise a copy of the content of the register. The content of the register may comprise, for example, a pointer to data to be used in the FIR filtering, and/or data defining the size of a vector of data elements to be used in the FIR filtering.

It should be noted that the fields 612, 614, 616 also inherently indicate the number of iterations to be performed by the outer and inner loops, since this information can be derived from the number of filter coefficients in the FIR filter and the number of data samples to be filtered. Other configurations of the instruction are naturally also possible without departing from the scope of the invention.

A second example of nested-loop operations that may be wrapped into a single instruction according to embodiments of the invention is a multiplication of two matrices. A standard solution to multiplying two matrices involves three loop levels as known in the art. With the nested-loop instruction 620 of Figure 6, this is all defined in a single instruction. The first field 621 of the example instruction 620 defines the operations to be performed by the data-processing unit when executing the nested-loop instruction i.e., the operations of each of the loops in the nested loop. The second, third and fourth fields 622, 624, 626 may for example indicate where to put the output data from multiplication, and where to find the input data, i.e., the matrices to be multiplied. As explained above, the indications may be either direct, or indirect by referencing one or more registers, and as before, the reference to a register may be a direct reference or it may comprise a copy of the content of the register. The content of the register may comprise, for example, a pointer to data to be used in matrix multiplication, and/or data defining the size of a vector of data elements to be used in the matrix multiplication. It should be noted that the second, third and fourth fields also inherently indicate the number of iterations to be performed by the loops, since this information can be derived from the sizes of the matrices to be multiplied. Other configurations of the instruction are naturally also possible without departing from the scope of the invention.

A third example of nested-loop operations that may be wrapped into a single instruction according to embodiments of the invention is illustrated by the general instruction 630 in Figure 6. In this example, it is not defined in the instruction itself whether a nested loop is to be executed or not. Instead, this is defined by one or more operands. For example an operand could be a pointer to a register, which comprises data indicating the number of iterations to be performed by one or more loops. If this data for example indicates that an outer loop should be performed once and an inner loop should be performed zero (0) times, the operations defined by the instruction do not comprise a nested loop. If, on the other hand, this data indicates that an outer and an inner loop should each be performed more than once, the operations defined by the instruction comprise a nested loop.

It should be noted that the definition by the operand may be embodied in numerous other ways. For example, the operand may point to a vector (or to a register that in turn points to a vector), where the size of the vector defines the number of iterations of the respective loop, and an empty vector corresponding to one of the loops indicates that the instruction does not comprise a nested loop. Another example might be that the operand may point to a vector (or to a register that in turn points to a vector) representing a matrix, and the matrix dimensions define the number of iterations of the inner and outer loops respectively. If the matrix is in fact one-dimensional, this may indicate that the instruction does not comprise a nested loop, but a single loop, for example.

It should be noted that the above example instructions 610, 620, 630 are non-limiting examples, and that there exists numerous other nested-loop operations, such as for example various transform calculations, that may be wrapped into a single instruction according to embodiments of the invention.

Moving on in Figure 6, more general example nested-loop instructions 640, 650, 660, 670, 680, according to embodiments of the invention, will now be described. As before, all of these nested-loop operations may be wrapped into a single instruction according to embodiments of the invention.

The first field 642 of the example instruction 640 defines the operations to be performed by the data-processing unit when executing the outer loop of the nested-loop instruction. The second field 644 of the example instruction 640 defines the operations to be performed by the data-processing unit when executing the inner loop of the nested-loop instruction. The third and fourth fields 646, 648 indicate the number of iterations to be performed by the outer and inner loops respectively. Other configurations of the instruction are naturally also possible without departing from the scope of the invention. For example, the described instruction fields may be organized in another order, some or all of the instruction fields may be merged into common instruction fields, and the nested-loop instruction may contain yet other instruction fields.

To further exemplify the above, the first and second fields 652, 654 of the example instruction 650 indicate the number of iterations to be performed by the outer and inner loops respectively, and the third field 656 defines the operations to be performed by the data-processing unit when executing the nested-loop instruction. The first field 662 of example instruction 660 defines the operations to be performed by the data-processing unit when executing the outer loop of the nested-loop instruction and the number of iterations to be performed by the outer loop. The second field 664 defines the operations to be performed by the data-processing unit when executing the inner loop and the number of iterations to be performed by the inner loop. Example instruction 670 only includes a single instruction field 672, which defines the operations to be performed by the data-processing unit when executing the nested-loop instruction and the number of iterations to be performed by the outer and inner loops. The first and second fields 682, 684 of the example instruction 680 indicate the number of iterations to be performed by the outer and inner loops respectively, the third field 686 defines the operations to be performed by the data-processing unit when executing the nested-loop instruction, and the fourth field contains some other data or information to be used when executing the nested-loop instruction.

Generally, it is noted that indications in the nested-loop instructions may be either direct, or indirect by referencing one or more registers. The reference to a register may be a direct reference or it may comprise a copy of the content of the register as mentioned above. When the reference to a register comprises a copy of the content of the register the register itself is free to be used by other instructions or operations, unless the register is designated as the receiver of an instruction result. The content of the register may comprise, for example, a pointer, such as a memory pointer, to data to be used in operations that are performed by the nested-loop instruction, or data defining the size of a vector of data elements that is an operand of the nested-loop instruction, or information regarding the number of iterations to be performed by each of the loops included in the instruction. It should be noted that the generalization of the example instructions described in connection to Figure 6 to instructions that define other nested loop configurations, such as more levels of loops, is straight forward for a skilled person, and that all such generalizations are contemplated to be within the scope of the invention.

Figure 7 illustrates a flow chart of a method 700 to be performed e.g. by a data-processing unit 10, 10a, according to some embodiments of the invention. The method 700 begins by fetching an instruction in step 710. As explained before the instruction is part of the instruction set defined for the particular processor, and is fetched e.g. from an external memory, such as memory unit 40 of Figures 2 and 3. Then, the instruction is decoded in step 720 and forwarded to an execution unit in step 730. The execution unit may be for example an instruction-execution unit 30, 30a, 30b, according to any of the Figures 2-4. The instruction is then executed in step 740 by the execution unit. When the instruction has been fetched, decoded and forwarded, the fetch and decode unit may continue operation by fetching and decoding another instruction , regardless if the execution of the instruction in 740 has been finalized or not. In fact, according to some processor architectures, the fetching of a new instruction may commence even before the previous instruction has been forwarded to an instruction-execution unit. For example, the fetching of a new instruction may begin as soon as decoding of the previous instruction has begun, or the fetching of a new instruction may begin by processing a first fetching step while the previous instruction is processed by a second fetching step. In general, each fetch and decode unit is capable of commencing the fetch of a new instruction in each processor execution cycle. In any case, it is clear from the above that if the processor comprises several instruction-execution units, parallel execution of several instructions is possible. According to embodiments of the invention, this is the case even if one or more of the instructions are nested-loop instructions.

As mentioned before, a data-processing unit according to embodiments of the invention may, for example, be embodied as or included within a DSP or a CPU. Furthermore, some DSPs and CPUs comprise an open interface to which other circuitry may be connected. Such circuitry may e.g. be a co-processor that can be utilized for extending the instruction set of the DSP or CPU and/or provide an accelerated performance to the DSP or CPU. A signalling protocol for transferring data and/or instructions between the DSP or CPU and the co-processor may be provided. Furthermore, instructions in the instruction set of the DSP or CPU may be reserved such that those instructions are to be executed on the co-processor. Consequently, embodiments of the invention may alternatively or additionally be embodied as or included within a co-processor.

Hence, the described embodiments of the invention and their equivalents may be performed by general-purpose circuits such as a digital signal processor (DSP), a central processing unit (CPU), a co-processor unit, a graphics processing unit (GPU), an accelerator, or by specialized circuits such as for example application specific integrated circuits (ASICs), where it should be understood that the term ASIC is intended to include any integrated circuit that is capable of processing based on programmable instructions. All such forms are contemplated to be within the scope of the invention. The invention may be embodied as an electronic apparatus comprising a data-processing unit according to any of the described embodiments. The electronic apparatus may be for example a portable or handheld mobile radio communication equipment, a mobile radio terminal, a mobile telephone, a pager, a communicator, an electronic organizer, a smartphone, a computer, an embedded drive, a mobile gaming device, or a (wrist) watch. The electronic apparatus may alternatively be a base station or a base station controller in a telecommunication system.

Figure 8 illustrates a mobile telephone 800 as an example electronic apparatus that comprises at least one data-processing unit 10, 10a as described above. The mobile telephone 800 is illustrated in a schematic front view. This example mobile telephone 800 comprises an antenna 801 mounted on the housing of the apparatus. Alternatively, the mobile telephone 800 may have an internal antenna mounted within the housing of the apparatus. The mobile telephone 800 may further comprise a display 804, a keypad 805, a loudspeaker 802, and a microphone 806, which together provides a man-machine interface for operating the mobile telephone 800.

The mobile telephone 800 is adapted to connect to a mobile telecommunication network via a wireless link to a radio station (base station). Hence, a user of the mobile telephone 800 may use conventional circuit-switched telecommunication services such as voice calls, data calls, video calls, and fax transmissions, as well as packet-based services such as electronic messaging, Internet browsing, electronic commerce, etc. To this end, the mobile telephone is compliant with a mobile telecommunication standard, for instance GSM (Global System for Mobile communications), GPRS (General Packet Radio Service), EDGE (Enhanced Data rates for GSM Evolution), UMTS (Universal Mobile Telecommunications System), or UMTS LTE (UMTS Long Term Evolution) .

The invention has been described herein with reference to various embodiments. However, a person skilled in the art would recognize numerous variations to the described embodiments that would still fall within the scope of the invention. For example, the method embodiments described herein describes the method through method steps being performed in a certain order. However, it is recognized that these sequences of events may take place in another order without departing from the scope of the invention. Hence, it should be understood that the limitations of the described embodiments are merely for illustrative purpose and by no means limiting. Instead, the invention is construed to be limited by the appended claims and all reasonable equivalents thereof.

## Claims

1. A data-processing unit comprising:
fetching and decoding circuitry (2, 3, 20) arranged to fetch and decode an instruction, wherein the instruction is a nested-loop instruction (610, 620, 630, 640, 650, 660, 670, 680) of an instruction set of the data-processing unit; and
execution circuitry (5a-c, 30, 30a, 30b) arranged to execute the nested-loop instruction,
wherein the nested-loop instruction comprises at least one instruction field (611, 612, 614, 616, 621, 622, 624, 626, 642, 644, 646, 648, 652, 654, 656, 662, 664, 672, 682, 684, 686, 688), said at least one instruction field being adapted to indicate:
a number of iterations of an outer loop (110) of the nested loop; and
a number of iterations of an inner loop (120) of the nested loop;
**characterized in that** the fetching and decoding circuitry is further arranged to decode said nested-loop instruction to identify:
one or more operations to be performed by the outer loop; and
one or more operations to be performed by the inner loop, indicated in said at least one instruction field of the nested-loop instruction.

2. The data-processing unit according to claim 1, wherein the inner loop is a first inner loop and wherein the at least one instruction field of the at least one nested-loop instruction is further adapted to indicate:
a number of iterations of a second inner loop of the nested loop and one or more iterations to be performed by the second inner loop, wherein the second inner loop is a loop on the same level as the first inner loop.

3. The data-processing unit according to any of claims 1 to 2, wherein the at least one instruction field of the at least one nested-loop instruction is further adapted to indicate:
a number of iterations of a third-level loop of the nested loop and one or more iterations to be performed by the third-level loop.

4. The data-processing unit according to any of claims 1 to 3, wherein the at least one instruction field is adapted to comprise at least one operand, and wherein the at least one operand indicates that the instruction is a nested-loop instruction.

5. The data-processing unit according to any of claims 1 to 4, wherein the at least one instruction field is adapted to comprise at least one reference to at least one register (50) of the data-processing unit.

6. The data-processing unit according to claim 5, wherein the at least one reference to at least one register of the data-processing unit comprises a copy of the content of the at least one register.

7. The data-processing unit according to any of claims 5 to 6, wherein the content of the at least one register comprises at least one of:
a pointer to data to be used in any of the at least one operation;
data to be used in any of the at least one operation; and
data defining a size of a vector of data elements, the vector being an operand of the at least one nested-loop instruction.

8. The data-processing unit according to any of claims 5 to 7, wherein the at least one register comprises a first register field comprising data adapted to indicate the number of iterations of the outer loop.

9. The data-processing unit according to any of claims 5 to 8, wherein the at least one register comprises a second register field comprising data adapted to indicate the number of iterations of the inner loop.

10. The data-processing unit according to any of claims 1 to 9, wherein the number of iterations of any of the loops is indicated by data comprising the number of iterations of the loop.

11. The data-processing unit according to any of claims 1 to 9, wherein the number of iterations of any of the loops is indicated by data comprising a start value and a stop value of a loop index of the loop.

12. The data-processing unit according to claim 11, wherein the data further comprises a step size for updating the loop index of the loop between subsequent iterations of the loop.

13. The data-processing unit according to any of claims 1 to 9, wherein the number of iterations of any of the loops is indicated by data defining a size of a vector of data elements, the vector being an operand of the at least one nested-loop instruction, and wherein the data-processing unit is adapted to derive the number of iterations of the loop based on the size.

14. The data-processing unit according to any of the preceding claims, wherein the fetching circuitry comprises a fetch and decode unit (20) and the execution circuitry comprises a first instruction-execution unit (30, 30a).

15. The data-processing unit according to claim 14, wherein the first instruction-execution unit comprises at least one functional unit (5a-c) adapted to execute the nested-loop instruction.

16. The data-processing unit according to any of claims 14 to 15, wherein the fetch and decode unit is adapted to, in response to fetching a nested-loop instruction, forward the nested-loop instruction to the first instruction-execution unit for execution in the first instruction-execution unit, and wherein the execution circuitry further comprises at least one second instruction-execution unit (30b) adapted to execute instructions in parallel with execution of the nested-loop instruction in the first instruction-execution unit.

17. The data-processing unit according to claim 16, wherein the nested-loop instruction is a first instruction, wherein the fetch and decode unit is further adapted to fetch a second instruction in parallel with the execution of the first instruction in the first instruction-execution unit, and wherein the second instruction is not associated with the execution of the first instruction.

18. The data-processing unit according to any of claims 14 to 17, wherein the first instruction-execution unit comprises:
a first and a second counter unit (410a-c) adapted to count iterations of the outer and inner loop, respectively; and
at least one loop-control unit (430) adapted to:
set the first and second counter units to a first and second start value before execution of the inner and outer loops, respectively;
update the first and second counter units during each iteration of the inner and outer loops, respectively;
stop execution of the inner loop when the second counter unit meets a first condition, wherein the first condition is associated with the inner loop; and
stop execution of the outer loop when the first counter unit meets a second condition, wherein the second condition is associated with the outer loop.

19. The data-processing unit according to claim 17, wherein the first instruction-execution unit further comprises:
a determination unit (420) for determining:
the first start value and a threshold value associated with the outer loop based on the at least one instruction field of the nested-loop instruction; and
the second start value and a threshold value associated with the inner loop based on the at least one instruction field of the nested-loop instruction.

20. The data-processing unit according to any of claims 18 to 19, wherein the first instruction-execution unit is further adapted to:
perform first operations associated with the outer loop before starting execution of the inner loop; and
perform second operations associated with the outer loop after stopping execution of the inner loop.

21. The data-processing unit according to any of the preceding claims further comprising one or more local storage units for storing intermediate results from the execution circuitry.

22. An electronic apparatus comprising a data-processing unit (1, 10, 10a) according to any of the preceding claims.

23. The electronic apparatus according to claim 22, wherein the electronic apparatus is a portable or handheld mobile radio communication equipment, a mobile radio terminal, a mobile telephone (800), a pager, a communicator, an electronic organizer, a smartphone, a computer, an embedded drive, a mobile gaming device, a watch, a base station, or a base station controller.

24. A method of performing a first instruction for use in a data-processing unit, wherein the first instruction is a nested-loop instruction (610, 620, 630, 640, 650, 660, 670, 680), the method comprising:
fetching (710) the first instruction from a memory (40) ;
decoding (720) the first instruction to identify an instruction type, a number of iterations of an outer loop (110) of the nested loop, and a number of iterations of an inner loop (120) of the nested loop;
forwarding (730) the first instruction to a first execution unit (5a, 30, 30a) of the data-processing unit; and
executing (740) the first instruction in the first execution unit;
**characterized in that** the step of decoding further comprises decoding the first instruction to identify one or more operations (210, 220, 270, 280, 290) to be performed by the outer loop, and one or more operations (230, 240, 250, 260) to be performed by the inner loop.

25. The method according to claim 24, wherein the inner loop is a first inner loop and wherein decoding the nested-loop instruction further comprises decoding the first instruction to identify:
a number of iterations of a second inner loop of the nested loop, and one or more iterations to be performed by the second inner loop, wherein the second inner loop is a loop on the same level as the first inner loop.

26. The method according to any of claims 24 to 25, wherein decoding the nested-loop instruction further comprises decoding the first instruction to identify:
a number of iterations of a third-level loop of the nested loop, and one or more iterations to be performed by the third-level loop.

27. The method according to any of claims 24 to 26, wherein decoding the nested-loop instruction further comprises determining that the first instruction is a nested-loop instruction based on an operand of the first instruction.

28. The method according to any of claims 24 to 27, further comprising
fetching (710) a second instruction from the memory;
decoding (720) the second instruction to identify an instruction type;
forwarding (730) the second instruction to a second execution unit (5b-c, 30b) of the data-processing unit; and
executing (740) the second instruction in the second execution unit in parallel with execution of the nested-loop instruction in the first execution unit.

29. The method according to any of claims 24 to 28, further comprising:
setting first and second counters to a first and second start value before execution of the outer and inner loops, respectively;
updating the first and second counters during each iteration of the outer and inner loops, respectively;
stopping (250) execution of the inner loop when a first condition is met, wherein the first condition is associated with the inner loop; and
stopping (280) execution of the outer loop when a second condition is met, wherein the second condition is associated with the outer loop.

30. The method according to any of claims 24 to 29, further comprising:
performing (220) first operations associated with the outer loop before starting execution of the inner loop; and
performing (270) second operations associated with the outer loop after stopping execution of the inner loop.

31. A processor instruction loadable into a data-processing unit (1, 10, 10a) and adapted to cause performance of nested-loop operations upon execution by execution circuitry (5a-c, 30, 30a, 30b) in the data-processing unit, the processor instruction comprising at least one instruction field (611, 612, 614, 616, 621, 622, 624, 626, 642, 644, 646, 648, 652, 654, 656, 662, 664, 672, 682, 684, 686, 688), the at least one instruction field adapted to indicate:
a number of iterations of an outer loop (110) of the nested loop; and
a number of iterations of an inner loop (120) of the nested loop;
**characterized in that** the at least one instruction field is further adapted to indicate:
one or more operations to be performed by the outer loop; and
one or more operations to be performed by the inner loop.

## Patentansprüche

1. Datenverarbeitungseinheit umfassend:
eine Abruf- und Dekodierungsschaltung (2, 3, 20), welche angeordnet ist, um eine Anweisung abzurufen und zu dekodieren, wobei die Anweisung eine verschachtelte Schleifenanweisung (610, 620, 630, 640, 650, 660, 670, 680) eines Anweisungssatzes der Datenverarbeitungseinheit ist; und
eine Ausführungsschaltung (5a-c, 30, 30a, 30b), welche angeordnet ist, die verschachtelte Schleifenanweisung auszuführen,
wobei die verschachtelte Schleifenanweisung mindestens ein Anweisungsfeld umfasst (611, 612, 614, 616, 621, 622, 624, 626, 642, 644, 646, 648, 652, 654, 656, 662, 664, 672, 682, 684, 686, 688), wobei das mindestens eine Anweisungsfeld ausgelegt ist, um anzugeben:
eine Anzahl von Iterationen einer äußeren Schleife (110) der verschachtelten Schleife; und
eine Anzahl von Iterationen einer inneren Schleife (120) der verschachtelten Schleife;
**dadurch gekennzeichnet, dass** die Abruf- und Dekodierungsschaltung (2, 3, 20) zusätzlich angeordnet ist, um die verschachtelte Schleifenanweisung zu dekodieren, um das Folgende zu identifizieren:
eine oder mehrere Operationen zur Durchführung durch die äußere Schleife; und
eine oder mehrere Operationen zur Durchführung durch die innere Schleife, welche in dem wenigstens einen Anweisungsfeld der verschachtelten Schleifenanweisung angegeben sind.

2. Datenverarbeitungseinheit nach Anspruch 1, wobei die innere Schleife eine erste innere Schleife ist und wobei das wenigstens eine Anweisungsfeld der wenigstens einen verschachtelten Schleifenanweisung zusätzlich ausgelegt ist, um anzugeben:
eine Anzahl von Iterationen einer zweiten inneren Schleife der verschachtelten Schleife und eine oder mehrere Iterationen zur Durchführung durch die zweite innere Schleife, wobei die zweite innere Schleife eine Schleife auf derselben Ebene wie die erste innere Schleife ist.

3. Datenverarbeitungseinheit nach einem der Ansprüche 1 bis 2, wobei das wenigstens eine Anweisungsfeld der wenigstens einen verschachtelten Schleifenanweisung zusätzlich ausgelegt ist, um anzugeben:
eine Anzahl von Iterationen einer Schleife einer dritten Ebene der verschachtelten Schleife und eine oder mehrere Iterationen zur Durchführung durch die Schleife der dritten Ebene.

4. Datenverarbeitungseinheit nach einem der Ansprüche 1 bis 3, wobei das wenigstens eine Anweisungsfeld ausgelegt ist, wenigstens einen Operanden zu umfassen und wobei der wenigstens eine Operand angibt, dass die Anweisung eine verschachtelte Schleifenanweisung ist.

5. Datenverarbeitungseinheit nach einem der Ansprüche 1 bis 4, wobei das wenigstens eine Anweisungsfeld ausgelegt ist, wenigstens eine Referenz zu wenigstens einem Register (50) der Datenverarbeitungseinheit zu umfassen.

6. Datenverarbeitungseinheit nach Anspruch 5, wobei die wenigstens eine Referenz zu dem wenigstens einen Register der Datenverarbeitungseinheit eine Kopie des Inhalts des wenigstens einen Registers umfasst.

7. Datenverarbeitungseinheit nach einem der Ansprüche 5 bis 6, wobei der Inhalt des wenigstens einen Registers wenigstens einen der folgenden Inhalte umfasst:
einen Zeiger auf Daten zur Verwendung in einer der wenigstens einen Operation;
Daten zur Verwendung in einer der wenigstens einen Operation;
und
Daten, welche eine Größe eines Vektors von Datenelementen definieren, wobei der Vektor ein Operand der wenigstens einen verschachtelten Schleifenanweisung ist.

8. Datenverarbeitungseinheit nach einem der Ansprüche 5 bis 7, wobei das wenigstens eine Register ein erstes Registerfeld umfasst, welches Daten umfasst, die für die Angabe der Anzahl der Iterationen der äußeren Schleife ausgelegt sind.

9. Datenverarbeitungseinheit nach einem der Ansprüche 5 bis 8, wobei das wenigstens eine Register ein zweites Registerfeld umfasst, welches Daten umfasst, die zur Angabe der Anzahl der Iterationen der inneren Schleife ausgelegt sind.

10. Datenverarbeitungseinheit nach einem der Ansprüche 1 bis 9, wobei die Anzahl der Iterationen einer jeden der Schleifen durch Daten angegeben wird, welche die Anzahl der Iterationen der Schleife umfassen.

11. Datenverarbeitungseinheit nach einem der Ansprüche 1 bis 9, wobei die Anzahl der Iterationen einer jeden der Schleifen durch Daten angegeben wird, welche einen Start-Wert und einen Stop-Wert eines Schleifenindex der Schleife umfassen.

12. Datenverarbeitungseinheit nach Anspruch 11, wobei die Daten zusätzlich eine Schrittweite für das Aktualisieren des Schleifenindex der Schleife zwischen aufeinanderfolgenden Iterationen der Schleife umfassen.

13. Datenverarbeitungseinheit nach einem der Ansprüche 1 bis 9, wobei die Anzahl der Iterationen einer jeden der Schleifen durch Daten angegeben wird, welche eine Größe eines Vektors von Datenelementen definieren, wobei der Vektor ein Operand der wenigstens einen verschachtelten Schleifenanweisung ist und wobei die Datenverarbeitungseinheit ausgelegt ist, um die Anzahl der Iterationen der Schleife auf Basis der Größe abzuleiten.

14. Datenverarbeitungseinheit nach einem der vorhergehenden Ansprüche, wobei die Abrufschaltung eine Abruf- und Dekodierungseinheit (20) umfasst und die Ausführungsschaltung eine erste Anweisungs-Ausführungseinheit (30, 30a) umfasst.

15. Datenverarbeitungseinheit nach Anspruch 14, wobei die erste Anweisungs-Ausführungseinheit wenigstens eine Funktionseinheit (5a-c) umfasst, welche ausgelegt ist, die verschachtelte Schleifenanweisung auszuführen.

16. Datenverarbeitungseinheit nach einem der Ansprüche 14 bis 15, wobei die Abruf- und Dekodierungseinheit ausgelegt ist, um, als Reaktion auf den Abruf einer verschachtelten Schleifenanweisung, die verschachtelte Schleifenanweisung der ersten Anweisungs-Ausführungseinheit zur Ausführung in der ersten Anweisungs-Ausführungseinheit weiterzuleiten und wobei die Ausführungsschaltung zusätzlich wenigstens eine zweite Anweisungs-Ausführungseinheit (30b) umfasst, welche ausgelegt ist, Anweisungen parallel zur Ausführung der verschachtelten Schleifenanweisung in der ersten Anweisungs-Ausführungseinheit auszuführen.

17. Datenverarbeitungseinheit nach Anspruch 16, wobei die verschachtelte Schleifenanweisung eine erste Anweisung ist, wobei die Abruf- und Dekodierungseinheit zusätzlich ausgelegt ist, um eine zweite Anweisung parallel zur Ausführung der ersten Anweisung in der ersten Anweisungs-Ausführungseinheit abzurufen, und wobei die zweite Anweisung nicht mit der Ausführung der ersten Anweisung verknüpft ist.

18. Datenverarbeitungseinheit nach einem der Ansprüche 14 bis 17, wobei die erste Anweisungs-Ausführungseinheit umfasst:
eine erste und zweite Zählereinheit (410a-c), die ausgelegt sind, jeweils die Iterationen der äußeren und inneren Schleife zu zählen; und
wenigstens eine Steuereinheit (430) für Schleifen, welche ausgelegt ist, um:
die erste und zweite Zählereinheit jeweils auf einen ersten und zweiten Start-Wert vor der Ausführung der inneren und äußeren Schleifen zu setzen;
die erste und zweite Zählereinheit jeweils während jeder Iteration der inneren und äußeren Schleifen zu aktualisieren;
die Ausführung der inneren Schleife zu stoppen, wenn die zweite Zählereinheit eine erste Bedingung erfüllt, wobei die erste Bedingung mit der inneren Schleife verknüpft ist; und
die Ausführung der äußeren Schleife zu stoppen, wenn die erste Zählereinheit eine zweite Bedingung erfüllt, wobei die zweite Bedingung mit der äußeren Schleife verknüpft ist.

19. Datenverarbeitungseinheit nach Anspruch 17, wobei die erste Anweisungs-Ausführungseinheit zusätzlich umfasst:
eine Bestimmungseinheit (420) zum Bestimmen:
des ersten Start-Werts und eines Schwellwerts, welcher mit der äußeren Schleife verknüpft ist, basierend auf dem wenigstens einen Anweisungsfeld der verschachtelten Schleifenanweisung; und
des zweiten Start-Werts und eines Schwellwerts, welcher mit der inneren Schleife verknüpft ist, basierend auf dem wenigstens einen Anweisungsfeld der verschachtelten Schleifenanweisung.

20. Datenverarbeitungseinheit nach einem der Ansprüche 18 bis 19, wobei die erste Anweisungs-Ausführungseinheit zusätzlich ausgelegt ist zum:
Durchführen erster Operationen, welche mit der äußeren Schleife verknüpft sind, bevor die Ausführung der inneren Schleife beginnt; und
Durchführen zweiter Operationen, welche mit der äußeren Schleife verknüpft sind, nachdem die Ausführung der inneren Schleife gestoppt wurde.

21. Datenverarbeitungseinheit nach einem der vorhergehenden Ansprüche, welche zusätzliche eine oder mehrere lokale Speichereinheiten für das Speichern von Zwischenergebnissen von der Ausführungsschaltung umfasst.

22. Elektronische Vorrichtung umfassend eine Datenverarbeitungseinheit (1, 10, 10a) nach einem der vorhergehenden Ansprüche.

23. Elektronische Vorrichtung nach Anspruch 22, wobei die elektronische Vorrichtung ein tragbares oder ein mobiles Hand-Funkkommunikationsgerät, ein Mobilfunkendgerät, ein Funktelefon (800), ein Pager, ein Kommunikator, ein elektronischer Terminkalender, ein Smartphone, ein Computer, ein eingebettetes Laufwerk, eine mobile Spieleinrichtung, eine Uhr, eine Basisstation oder eine Basisstationssteuerung ist.

24. Verfahren zum Ausführen einer ersten Anweisung für die Verwendung in einer Datenverarbeitungseinheit, wobei die erste Anweisung eine verschachtelte Schleifenanweisung (610, 620, 630, 640, 650, 660, 670, 680) ist, wobei das Verfahren umfasst:
Abrufen (710) der ersten Anweisung von einem Speicher (40);
Dekodieren (720) der ersten Anweisung, um einen Anweisungstyp, eine Anzahl von Iterationen einer äußeren Schleife (110) der verschachtelten Schleife und eine Anzahl von Iterationen einer inneren Schleife (120) der verschachtelten Schleife zu identifizieren;
Weiterleiten (730) der ersten Anweisung an eine erste Ausführungseinheit (5a, 30, 30a) der Datenverarbeitungseinheit; und
Ausführen (740) der ersten Anweisung in der ersten Ausführungseinheit;
**dadurch gekennzeichnet, dass** der Schritt des Dekodierens zusätzlich das Dekodieren der ersten Anweisung umfasst, um eine oder mehrere Operationen (210, 220, 270, 280, 290) zur Durchführung durch die äußere Schleife zu identifizieren, und eine oder mehrere Operationen (230, 240, 250, 260) zur Durchführung durch die innere Schleife.

25. Verfahren nach Anspruch 24, wobei die innere Schleife eine erste innere Schleife ist und wobei das Dekodieren der verschachtelten Schleifenanweisung zusätzlich das Dekodieren der ersten Anweisung umfasst, um zu identifizieren:
eine Anzahl von Iterationen einer zweiten inneren Schleife der verschachtelten Schleife und eine oder mehrere Iterationen zur Durchführung durch die zweite innere Schleife, wobei die zweite innere Schleife eine Schleife auf der selben Ebene wie die erste innere Schleife ist.

26. Verfahren nach einem der Ansprüche 24 bis 25, wobei das Dekodieren der verschachtelten Schleifenanweisung zusätzlich das Dekodieren der ersten Anweisung umfasst, um zu identifizieren:
eine Anzahl von Iterationen einer Schleife einer dritten Ebene der verschachtelten Schleife und eine oder mehrere Iterationen zur Durchführung durch die Schleife der dritten Ebene.

27. Verfahren nach einem der Ansprüche 24 bis 26, wobei das Dekodieren der verschachtelten Schleifenanweisung zusätzlich das Bestimmen basierend auf einem Operand der ersten Anweisung umfasst, dass die erste Anweisung eine verschachtelte Schleifenanweisung ist.

28. Verfahren nach einem der Ansprüche 24 bis 27, ferner umfassend:
Abrufen (710) einer zweiten Anweisung vom Speicher;
Dekodieren (720) der zweiten Anweisung, um einen Anweisungstyp zu identifizieren;
Weiterleiten (730) der zweiten Anweisung an eine zweite Ausführungseinheit (5b-c, 30b) der Datenverarbeitungseinheit; und
Ausführen (740) der zweiten Anweisung in der zweiten Ausführungseinheit parallel zur Ausführung der verschachtelten Schleifenanweisung in der ersten Ausführungseinheit.

29. Verfahren nach einem der Ansprüche 24 bis 28, ferner umfassend:
Setzen eines ersten und zweiten Zählers auf jeweils einen ersten und zweiten Start-Wert vor der Ausführung der äußeren und inneren Schleife;
Aktualisieren jeweils des ersten und zweiten Zählers während jeder Iteration der ersten und zweiten Schleife;
Stoppen (250) der Ausführung der inneren Schleife, wenn eine erste Bedingung erfüllt ist, wobei die erste Bedingung mit der inneren Schleife verknüpft ist; und
Stoppen (280) der Ausführung der äußeren Schleife, wenn eine zweite Bedingung erfüllt ist, wobei die zweite Bedingung mit der äußeren Schleife verknüpft ist.

30. Verfahren nach einem der Ansprüche 24 bis 29, ferner umfassend:
Durchführen (220) erster Operationen, welche mit der äußeren Schleife verknüpft sind, bevor die Ausführung der inneren Schleife beginnt; und
Durchführen (270) zweiter Operationen, welche mit der äußeren Schleife verknüpft sind, nachdem die Ausführung der inneren Schleife gestoppt wurde.

31. Prozessoranweisung, welche in eine Datenverarbeitungseinheit (1, 10, 10a) ladbar ist und ausgelegt ist, um die Durchführung verschachtelter Schleifenoperationen bei der Ausführung durch eine Ausführungsschaltung (5a-c, 30, 30a, 30b) in der Datenverarbeitungseinheit zu bewirken, wobei die Prozessoranweisung wenigstens ein Anweisungsfeld umfasst (611, 612, 614, 616, 621, 622, 624, 626, 642, 644, 646, 648, 652, 654, 656, 662, 664, 672, 682, 684, 686, 688), wobei das wenigstens eine Anweisungsfeld ausgelegt ist, um anzugeben:
eine Anzahl von Iterationen der äußeren Schleife (110) der verschachtelten Schleife; und
eine Anzahl von Iterationen einer inneren Schleife (120) der verschachtelten Schleife;
**dadurch gekennzeichnet, dass** das wenigstens eine Anweisungsfeld zusätzlich ausgelegt ist, um anzugeben:
eine oder mehrere Operationen zur Durchführung durch die äußere Schleife; und
eine oder mehrere Operationen zur Durchführung durch die innere Schleife.

## Revendications

1. Unité de traitement de données comprenant :
des circuits (2, 3, 20) de recherche et de décodage agencés pour chercher et décoder une instruction, où l'instruction est une instruction (610, 620, 630, 640, 650, 660, 670, 680) de boucle imbriquée d'un ensemble d'instructions de l'unité de traitement de données ; et
des circuits d'exécution (5a-c, 30, 30a, 30b) agencés pour exécuter l'instruction de boucle imbriquée,
où l'instruction de boucle imbriquée comprend au moins un champ d'instruction (611, 612, 614, 616, 621, 622, 624, 626, 642, 644, 646, 648, 652, 654, 656, 662, 664, 672, 682, 684, 686, 688), ledit au moins un champ d'instruction étant adapté pour indiquer :
un nombre d'itérations d'une boucle externe (110) de la boucle imbriquée ; et
un nombre d'itérations d'une boucle interne (120) de la boucle imbriquée ;
**caractérisée en ce que**
les circuits de recherche et de décodage sont en outre agencés pour décoder ladite instruction de boucle imbriquée afin d'identifier :
une ou plusieurs opérations à exécuter par la boucle externe ; et
une ou plusieurs opérations à exécuter par la boucle interne, indiquées dans ledit au moins un champ d'instruction de l'instruction de boucle imbriquée.

2. Unité de traitement de données selon la revendication 1,
dans laquelle la boucle interne est une première boucle interne et où l'au moins un champ d'instruction de l'au moins une instruction de boucle imbriquée est adapté en plus pour indiquer :
un nombre d'itérations d'une deuxième boucle interne de la boucle imbriquée et une ou plusieurs itérations à exécuter par la deuxième boucle interne, où la deuxième boucle interne est une boucle du même niveau que la première boucle interne.

3. Unité de traitement de données selon l'une quelconque des revendications 1 à 2, dans laquelle l'au moins un champ d'instruction de l'au moins une instruction de boucle imbriquée est adapté en plus pour indiquer :
un nombre d'itérations d'une boucle de troisième niveau de la boucle imbriquée et une ou plusieurs itérations à exécuter par la boucle de troisième niveau.

4. Unité de traitement de données selon l'une quelconque des revendications 1 à 3, dans laquelle l'au moins un champ d'instruction est adapté pour comprendre au moins un opérande, et où l'au moins un opérande indique que l'instruction est une instruction de boucle imbriquée.

5. Unité de traitement de données selon l'une quelconque des revendications 1 à 4, dans laquelle l'au moins un champ d'instruction est adapté pour comprendre au moins une référence à au moins un registre (50) de l'unité de traitement de données.

6. Unité de traitement de données selon la revendication 5, dans laquelle l'au moins une référence à un registre au moins de l'unité de traitement de données comprend une copie du contenu de l'au moins un registre.

7. Unité de traitement de données selon l'une quelconque des revendications 5 à 6, dans laquelle le contenu du registre au moins comprend au moins l'un de :
un pointeur à des données à utiliser dans l'une quelconque de l'au moins une opération ;
des données à utiliser dans l'une quelconque de l'au moins une opération ; et
des données définissant une taille d'un vecteur d'éléments de données, le vecteur étant un opérande de l'au moins une instruction de boucle imbriquée.

8. Unité de traitement de données selon l'une quelconque des revendications 5 à 7, dans laquelle le au moins un registre comprend un premier champ de registre comprenant des données adaptées pour indiquer le nombre d'itérations de la boucle externe.

9. Unité de traitement de données selon l'une quelconque des revendications 5 à 8, dans laquelle le au moins un registre comprend un deuxième champ de registre comprenant des données adaptées pour indiquer le nombre d'itérations de la boucle interne.

10. Unité de traitement de données selon l'une quelconque des revendications 1 à 9, dans laquelle le nombre d'itérations de l'une quelconque des boucles est indiqué par des données comprenant le nombre d'itérations de la boucle.

11. Unité de traitement de données selon l'une quelconque des revendications 1 à 9, dans laquelle le nombre d'itérations de l'une quelconque des boucles est indiqué par des données comprenant une valeur de départ et une valeur d'arrêt d'un index de boucle de la boucle.

12. Unité de traitement de données selon la revendication 11, dans laquelle les données comprennent en plus une taille de pas pour mettre à jour l'index de boucle de la boucle entre des itérations consécutives de la boucle.

13. Unité de traitement de données selon l'une quelconque des revendications 1 à 9, dans laquelle le nombre d'itérations de l'une quelconque des boucles est indiqué par des données définissant une taille d'un vecteur d'éléments de données, le vecteur étant un opérande de l'au moins une instruction de boucle imbriquée, et où l'unité de traitement de données est adaptée pour dériver le nombre d'itérations de la boucle en fonction de la taille.

14. Unité de traitement de données selon l'une quelconque des revendications précédentes, dans laquelle les circuits de recherche comprennent une unité (20) de recherche et de décodage et les circuits d'exécution comprennent une première unité (30, 30a) d'exécution d'instruction.

15. Unité de traitement de données selon la revendication 14, dans laquelle la première unité d'exécution d'instruction comprend au moins une unité fonctionnelle (5a-c) adaptée pour exécuter l'instruction de boucle imbriquée.

16. Unité de traitement de données selon l'une quelconque des revendications 14 à 15, dans laquelle l'unité de recherche et de décodage est adaptée pour acheminer l'instruction de boucle imbriquée à la première unité d'exécution d'instruction pour exécution dans la première unité d'exécution d'instruction, en réponse à la recherche d'une instruction de boucle imbriquée, et où les circuits d'exécution comprennent en plus au moins une deuxième unité (30b) d'exécution d'instruction adaptée pour exécuter des instructions parallèlement à l'exécution de l'instruction de boucle imbriquée dans la première unité d'exécution d'instruction.

17. Unité de traitement de données selon la revendication 16, dans laquelle l'instruction de boucle imbriquée est une première instruction, où l'unité de recherche et de décodage est adaptée en plus pour rechercher une deuxième instruction parallèlement à l'exécution de la première instruction dans la première unité d'exécution d'instruction, et où la deuxième instruction n'est pas associée à l'exécution de la première instruction.

18. Unité de traitement de données selon l'une quelconque des revendications 14 à 17, dans laquelle la première unité d'exécution d'instruction comprend :
des première et deuxième unités de comptage (410a-c) adaptées pour compter des itérations de la boucle externe et interne, respectivement ; et
au moins une unité (430) de commande de boucle adaptée pour :
régler les première et deuxième unités de comptage sur des première et deuxième valeurs de départ avant l'exécution des boucles externe et interne, respectivement ;
mettre à jour les première et deuxième unités de comptage pendant chaque itération des boucles externe et interne, respectivement ;
arrêter l'exécution de la boucle interne lorsque la deuxième unité de comptage satisfait à une première condition, où la première condition est associée à la boucle interne ; et
arrêter l'exécution de la boucle externe lorsque la première unité de comptage satisfait à une deuxième condition, où la deuxième condition est associée à la boucle externe.

19. Unité de traitement de données selon la revendication 17, dans laquelle la première unité d'exécution d'instruction comprend en plus :
une unité de détermination (420) destinée à déterminer :
la première valeur de départ ainsi qu'une valeur seuil associée à la boucle externe selon l'au moins un champ d'instruction de l'instruction de boucle imbriquée ; et
la deuxième valeur de départ ainsi qu'une valeur seuil associée à la boucle interne selon l'au moins un champ d'instruction de l'instruction de boucle imbriquée.

20. Unité de traitement de données selon l'une quelconque des revendications 18 à 19, dans laquelle la première unité d'exécution d'instruction est adaptée en plus pour :
exécuter des premières opérations associées à la boucle externe avant de commencer l'exécution de la boucle interne ; et
exécuter des deuxièmes opérations associées à la boucle externe après l'arrêt de l'exécution de la boucle interne.

21. Unité de traitement de données selon l'une quelconque des revendications précédentes, comprenant en outre une ou plusieurs unités de stockage local pour stocker des résultats intermédiaires des circuits d'exécution.

22. Appareil électronique comprenant une unité (1, 10, 10a) de traitement de données selon l'une quelconque des revendications précédentes.

23. Appareil électronique selon la revendication 22, dans lequel l'appareil électronique est un équipement de radiocommunication mobile de poche ou portable, un terminal radio mobile, un téléphone mobile (800), un téléavertisseur, un appareil de communication, un organiseur électronique, un téléphone intelligent, un ordinateur, un lecteur intégré, un dispositif de jeu mobile, une montre, une station de base ou une unité de commande de station de base.

24. Procédé d'exécution d'une première instruction à utiliser dans une unité de traitement de données, où la première instruction est une instruction (610, 620, 630, 640, 650, 660, 670, 680) de boucle imbriquée, le procédé comprenant le fait de :
rechercher (710) la première instruction à partir d'une mémoire (40) ;
décoder (720) la première instruction afin d'identifier un type d'instruction, un nombre d'itérations d'une boucle externe (110) de la boucle imbriquée et un nombre d'itérations d'une boucle interne (120) de la boucle imbriquée ;
acheminer (730) la première instruction à une première unité d'exécution (5a, 30, 30a) de l'unité de traitement de données ; et
exécuter (740) la première instruction dans la première unité d'exécution ;
**caractérisé en ce que** l'étape de décodage comprend en outre le fait de décoder la première instruction afin d'identifier une ou plusieurs opérations (210, 220, 270, 280, 290) à exécuter par la boucle externe, et une ou plusieurs opérations (230, 240, 250, 260) à exécuter par la boucle interne.

25. Procédé selon la revendication 24, dans lequel la boucle interne est une première boucle interne et où le décodage de l'instruction de boucle imbriquée comprend en plus le fait de décoder la première instruction afin d'identifier :
un nombre d'itérations d'une deuxième boucle interne de la boucle imbriquée, et une ou plusieurs itérations à exécuter par la deuxième boucle interne, où la deuxième boucle interne est une boucle sur le même niveau que la première boucle interne.

26. Procédé selon l'une quelconque des revendications 24 à 25, dans lequel le décodage de l'instruction de boucle imbriquée comprend en plus le fait de décoder la première instruction afin d'identifier :
un nombre d'itérations d'une boucle de troisième niveau de la boucle imbriquée, et une ou plusieurs itérations à exécuter par la boucle de troisième niveau.

27. Procédé selon l'une quelconque des revendications 24 à 26, dans lequel le décodage de l'instruction de boucle imbriquée comprend en plus le fait de déterminer que la première instruction est une instruction de boucle imbriquée en fonction d'un opérande de la première instruction.

28. Procédé selon l'une quelconque des revendications 24 à 27, comprenant en plus le fait de :
rechercher (710) une deuxième instruction à partir de la mémoire ;
décoder (720) la deuxième instruction pour identifier un type d'instruction ;
acheminer (730) la deuxième instruction à une deuxième unité d'exécution (5b-c, 30b) de l'unité de traitement de données ; et
exécuter (740) la deuxième instruction dans la deuxième unité d'exécution parallèlement à l'exécution de l'instruction de boucle imbriquée dans la première unité d'exécution.

29. Procédé selon l'une quelconque des revendications 24 à 28, comprenant en plus le fait de :
régler des premier et deuxième compteurs sur des première et deuxième valeurs de départ avant l'exécution des boucles externe et interne, respectivement ;
mettre à jour les premier et deuxième compteurs pendant chaque itération des boucles externe et interne, respectivement ;
arrêter (250) l'exécution de la boucle interne lorsqu'une première condition est satisfaite, où la première condition est associée à la boucle interne ; et
arrêter (280) l'exécution de la boucle externe lorsqu'une deuxième condition est satisfaite, où la deuxième condition est associée à la boucle externe.

30. Procédé selon l'une quelconque des revendications 24 à 29, comprenant en plus le fait :
d'exécuter (220) des premières opérations associées à la boucle externe avant de commencer l'exécution de la boucle interne ; et
d'exécuter (270) des deuxièmes opérations associées à la boucle externe après l'arrêt de l'exécution de la boucle interne.

31. Instruction de processeur qui peut être chargée dans une unité (1, 10, 10a) de traitement de données et adaptée pour mettre en oeuvre l'exécution d'opérations de boucle imbriquée lors de l'exécution par des circuits (5a-c, 30, 30a, 30b) d'exécution dans l'unité de traitement de données, l'instruction de processeur comprenant au moins un champ d'instruction (611, 612, 614, 616, 621, 622, 624, 626, 642, 644, 646, 648, 652, 654, 656, 662, 664, 672, 682, 684, 686, 688), l'au moins un champ d'instruction adapté pour indiquer :
un nombre d'itérations d'une boucle externe (110) de la boucle imbriquée ; et
un nombre d'itérations d'une boucle interne (120) de la boucle imbriquée ;
**caractérisée en ce que** l'au moins un champ d'instruction est adapté en outre pour indiquer :
une ou plusieurs opérations à exécuter par la boucle externe ; et
une ou plusieurs opérations à exécuter par la boucle interne.
